# EUROPEAN PATENT APPLICATION

(11) **EP 4 521 322 A1**
(43) Date of publication of application: **12.03.2025**
(21) Application number: 24199142.1
(22) Date of filing: 09.09.2024
(51) Int. Cl.: G06Q 10/083, G06Q 10/087, G06Q 50/40, B60P 3/00

(54) **AUTONOMOUS VEHICLE TRANSIENT WAREHOUSE SYSTEM**

(30) Priority: 11.09.2023 IN 202311061107
(71) Applicant: NOVUS HI-TECH ROBOTIC SYSTEMZ PRIVATE LTD, 122001 Gurgaon Haryana (IN)
(72) Inventor: KAPURIA, ANUJ, 122001 Gurugram (IN)
(74) Representative: Hafner & Kohl PartmbB

(57) **Abstract**

An autonomous vehicle transient warehouse system (100) is disclosed. The system (100) includes a vehicle (104) for accessing a plurality of items from a first location (202) and then delivering to a second location (204), a plurality of storage racks (108) placed within a container (110) of the vehicle (104) in order to store the items, a processor (102) is configured to receive a plurality of orders from a plurality of customer, select a delivery path, move the vehicle (104) from the first location (202) to the second location (204), sends real-time notification to a delivery agent through a user terminal (106), a lifting unit (112) attached with the storage racks (108) for moving items from the at least one rack (108) to the at least one other rack (108), and a solar powered charging unit (114) fixed within the vehicle (104) for providing power to the vehicle (104).

## Description

### FIELD OF THE INVENTION

Embodiments of the present invention relate to the field of delivery vehicles and more particularly to an autonomous vehicle transient warehouse system for dynamic deliveries of items to an item requester more efficiently, thereby timely dispatching an order to the item requester, hence increasing customer demand.

### BACKGROUND OF THE INVENTION

A warehouse is a place where goods are stored in bulk amounts after getting received from different sources for further distribution to their respective destinations. Generally, the warehouse is stationed in a large building where incomings from different senders are received, then it is sorted and categorized on the basis of either item type or by their destination address. The items are then dispatched to their respective locations.

The conventional e-commerce delivery system is often troublesome to the buyer, and the requester. In this method, the sending and receiving parties have a hasslesome experience. Issues like delay in delivery, delivery to a wrong address, wastage of time in traveling to the warehouse location, etc.

Another example is US20150269520A1 discloses a technique for managing different types of transportation vehicles are provided. In some embodiments, a transient warehouse can be established that allows a wide variety of transport vehicles to access items from a more convenient location than a brick-and-mortar location. The transient warehouse can be established in a parking lot or on the side of the road, so that other transport vehicles can access the transient warehouse quickly and deliver items to item requesters more efficiently from a centralized location. The transport vehicles can also pick up items from item providers to replenish items for the transient warehouse, the transient warehouse can access items from a brick-and-mortar location, and/or the transport vehicles can travel to multiple item requesters through optimized transport routes. The meeting location of the transient warehouse may also be optimized based on various constraints (e.g., time of day, seasonality concerns, etc.).

Conventionally, there exist various systems and methods for providing transient warehouses in order to store goods in bulk. However, in order to achieve the objective, a vehicle is used for accessing a plurality of items from a first location and then delivering to a second location by parking the vehicle in the second location, so that other transport vehicles access the transient warehouse quickly and deliver items.

In order to overcome the aforementioned drawbacks, there is a need to provide an autonomous vehicle transient warehouse system that is an enhancement to the conventional system. This system is capable of shipping the items to an items requester on time. This system reduces human efforts involved in loading and unloading items on the vehicle, according to an order, hence reducing the wastage of time.

### OBJECTS OF THE INVENTION

The principal object of the present invention is to overcome the disadvantage of the prior art.

Another object of the present invention is to provide a system that helps in providing satisfaction to the customers as they receive their orders on time and increase customer demands.

Another object of the present invention is to provide a system that helps in accessing the transient warehouse quickly and automatically delivering the items to an items requester.

Another object of the present invention is to provide a system that helps in saving time and manual efforts by delivering the ordered items.

Another object of the present invention is to provide a system that helps in storing and handling items placed in the vehicle in order to prevent them from getting damaged before delivery.

Another object of the present invention is to provide the system that helps in notifying the delivery agent about the delivery location and successful delivery of the order.

Another object of the present invention is to provide a system that helps in the real-time tracking of the vehicle.

Another object of the present invention is to provide the autonomous vehicle transient warehouse system that is quick and responsive.

### SUMMARY OF THE INVENTION

An embodiment of the present disclosure relates to an autonomous vehicle transient warehouse system. This system is basically providing the convenient and effortless quick delivery of the ordered items to an item requester by using a vehicle that access a plurality of items from a first location and then delivering to a second location, as this is a fully automated mechanism it reduces the probability of human errors.

In one general aspect, the system includes a vehicle, a plurality of items, a plurality of storage racks, a container, a processor, a lifting unit, and a solar powered charging unit. Other embodiments of this aspect include corresponding architecture, apparatus, and computer programs recorded on one or more storage devices, each configured to perform the actions of the methods.

In accordance with an embodiment of the present invention, the system includes a vehicle that is anyone of a van, a tractor, a truck, a semi-trailer, a tank car, a rail car, a bicycle, an unmanned vehicle (e.g., an unmanned aerial vehicle (UAV), a land-based unmanned vehicle, etc.), or a remotely-operated machine access the plurality of items from a first location and then delivering to a second location.

In accordance with an embodiment of the present invention, the first location is anyone of an order packing station, a warehouse, a store house, and a fulfillment center, alike.

In accordance with an embodiment of the present invention, the vehicle is parked in the second location that is anyone of a brick-and-mortar location, a parking lot, order exchanging location, an order delivery station, etc., so that other transport vehicle accesses the transient warehouse quickly and deliver items to the second location.

In accordance with an embodiment of the present invention, the plurality of storage racks are placed within the container of the vehicle in order to store the items. Further, a scanning unit is placed inside the vehicle that scans the plurality of items, by scanning a scannable code affixed to the plurality of items.

In accordance with an embodiment of the present invention, the system also includes a display unit for displaying delivery details input and delivery route to a delivery agent. Further, the display unit is anyone of a LCD (Liquid Crystal Display) screen, a projector, a touch screen, and a flat-panel.

In accordance with an embodiment of the present invention, the processor is configured to receive a plurality of orders from a plurality of customer, select a delivery path according to a delivery information, move the vehicle from the first location to the second location, and sends real-time notification to the delivery agent through a user terminal.

In accordance with an embodiment of the present invention, the user terminal is anyone of a mobile app, desktop, and laptop. Further, the real time notification is an Instant Message notification, an SMS, an email, and in-app notification, or any other suitable notification means.

In accordance with an embodiment of the present invention, the system further includes a memory unit that is used for storing order details, delivery information and scanning details.

In accordance with an embodiment of the present invention, the system further includes the lifting unit for moving items from the at least one rack to the at least one other rack.

In accordance with an embodiment of the present invention, the lifting unit is anyone of a conveyor, a lifter, and a shuttle attached with the storage racks.

In accordance with an embodiment of the present invention, the system further includes the solar powered charging unit that is fixed within the vehicle for providing power to the vehicle.

These and other objects, embodiments and advantages of the present disclosure will become readily apparent to those skilled in the art from the following detailed description of the embodiments having reference to the attached figures, the disclosure not being limited to any particular embodiments disclosed.

### BRIEF DESCRIPTION OF THE DRAWINGS

So that the manner in which the above recited features of the present invention is be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Fig.1 illustrates a line diagram of an autonomous vehicle transient warehouse system; and
Fig.2 illustrates an interaction of a vehicle with a first location and a second location.

### DETAILED DESCRIPTION

The present invention relates to an autonomous vehicle transient warehouse system for providing convenient and delay-free collection and delivery of the items which are requested or ordered by an item requester. The users do not have to worry and waste their time in sending the items to the warehouse for further dispatch, on the contrary, the warehouse itself goes to the location of the requester to collect or deliver the parcel which is way more convenient than the conventional method.

Embodiments of the present disclosure will be described more fully hereinafter with reference to the accompanying drawings in which, like numerals represent like elements throughout the several figures, and in which example embodiments are shown. Embodiments of the claims may, however, be embodied in many different forms and should not be construed as limited to the embodiments set forth herein. The examples set forth herein are nonlimiting examples and are merely examples among other possible examples.

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred systems and methods are now described.

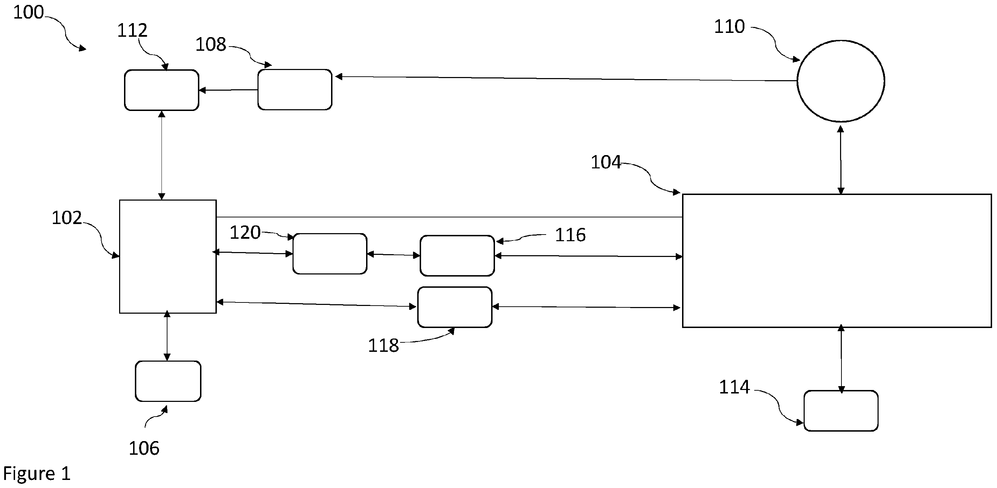

Fig.1 illustrates a line diagram of the autonomous vehicle transient warehouse system 100, according to an embodiment of a present invention. The system 100 includes a vehicle 104 that is anyone of a van, a tractor, a truck, a semi-trailer, a tank car, a rail car, a bicycle, an unmanned vehicle (e.g., an unmanned aerial vehicle (UAV), a land-based unmanned vehicle, etc.), or a remotely-operated machine. The vehicle 104 easily access a plurality of items from a first location 202 and then delivering to a second location 204.

In another embodiment, a plurality of storage racks 108 placed within a container 110 of the vehicle 104 in order to store the items, wherein a scanning unit 116 is also placed inside the vehicle 104 that scans the plurality of items, by scanning a scannable code affixed to the plurality of items. The system 100 also include a display unit 118 for displaying delivery details input and delivery route to the delivery agent. The display unit 118 is anyone of a LCD (Liquid Crystal Display) screen, a projector, a touch screen, and a flat-panel.

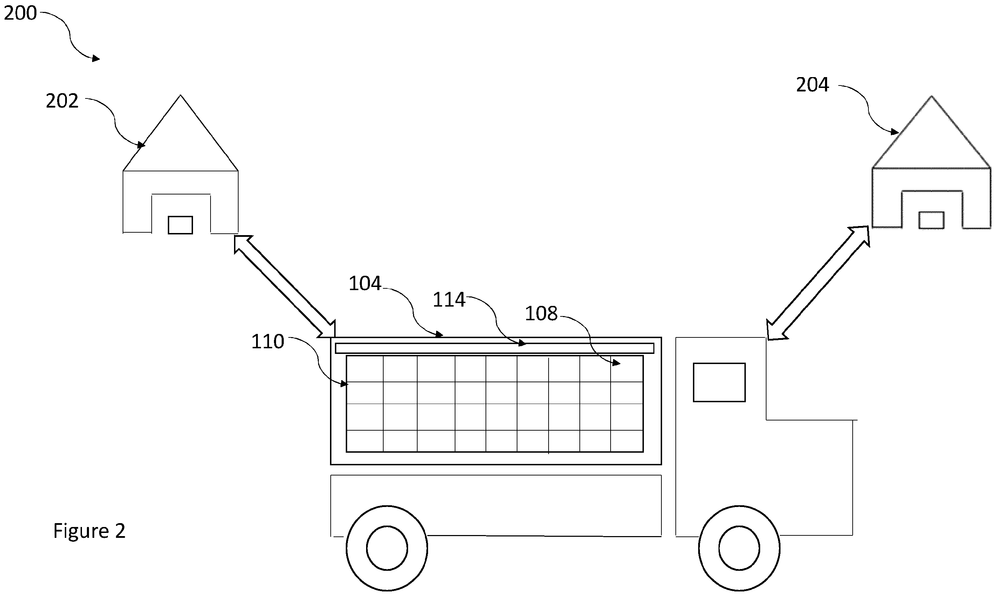

The system 100 further comprising, a processor 102 that is configured to receive a plurality of orders from a plurality of customer, select a delivery path, move the vehicle 104 from the first location 202 (refer fig.2) to the second location 204, sends real-time notification to a delivery agent through a user terminal 106. The user terminal 106 is anyone of a mobile app, desktop, and laptop and the real time notification is an Instant Message notification, an SMS, an email, and in-app notification, or any other suitable notification means. The system 100 further includes a memory unit 120 that is used for storing order details, delivery information and scanning details.

In another embodiment, a lifting unit 112 is attached with the storage racks 108 for moving items from the at least one rack 108 to the at least one other rack 108. Further, the system 100 includes a solar powered charging unit 114 fixed within the vehicle 104 for providing power to the vehicle 104. The lifting unit 112 is anyone of a conveyor, a lifter, and a shuttle.

Fig. 2, illustrates an interaction of a vehicle 104 (refer fig.1) with the first location 202 and the second location 204, according to an embodiment of a present invention. The first location 202 is anyone of an order packing station, a warehouse, a store house, and a fulfillment center, etc. For delivering the items to the second location 204, the vehicle firstly parked in the second location 204, then other transport vehicle 104 accesses the transient warehouse quickly and deliver items. The second location 204 is anyone of a brick-and-mortar location, a parking lot, order exchanging location, an order delivery station, etc. Further, the second location 204 is determined to optimize the efficiency of a transport route while including a maximum number of pick-up, drop-off, and/or base locations.

The plurality of items is loaded onto the container 110 (refer fig.1) of the vehicle 104, then the scanner 116 scans the items, by scanning a scannable code affixed with it. The scanning may be performed by using an inbuilt scanner 116. At the same time, the scanner 116 sends the data to the processor 102 of the vehicle 104. The lifting unit 112 moves the loaded item from at least one rack 108 to another rack 108, according to the route decided for delivery. This arrangement of the items helps the delivery agent in moving out the items sequentially.

In accordance with an embodiment of the present invention, when the delivery agent in the vehicle 104 moves out for initiating delivery of the orders, the vehicle 104 (refer fig.1) using the information received by its processor 102 and/or in synchronization with the user terminal 106 of the delivery agent, determines, which order is about to be delivered. After determining, the vehicle 104 moves from the first location 202 towards the second location 204, with help of the delivery route that is received from the processor 102.

In accordance with an embodiment of the present invention, the processor 102 (refer fig.1) further sends a signal to the display unit 118. The display unit 118 show the delivery route and information to the delivery agent, so that agent move the vehicle 104 quickly without any delay. The solar-powered charging unit 114 provides the required power to the scanning unit 116, memory unit 120, processor 102, lifting unit 112, which eventually keeps the working smooth. The system 100 may also include a navigation device i.e. GPS (Global Positioning System) for real-time tracking of the vehicle 104. This saves lot of time in delivery in case there are multiple orders are placed.

In one embodiment, the system is either autonomous or semi-autonomous in nature. The vehicle 104 (refer fig.1) is either semi-autonomously or preferably autonomously accessing the plurality of items from the first location 202 and then delivering to the second location 204. The processor 102 is fitted within the vehicle 104. Thus, the transport vehicle 104 autonomously retrieve one or more items at the first location 202 and communicate autonomously with the processor 102 for further delivery location information in order to successfully selection of the delivery path. The vehicle 104 whether autonomously or semi-autonomously moves on the selected delivery path.

In one embodiment, the vehicle 104 (refer fig.1) autonomously sends real-time notification to the delivery agent through the user terminal 106, wherein the real time notification is an Instant Message notification, an SMS, or an email. The lifting unit 112 is attached with the storage racks 108 placed within the warehouse of the vehicle 104. The lifting unit 112 whether autonomously or semi-autonomously move items from the at least one rack 108 to the at least one other rack 108 in order to place the items safely.

In accordance with an exemplary embodiment of the present invention, the transport route includes multiple steps in order to transport or deliver an item between locations (202, 204). For example, the transport route began from the first location 202 i.e. the base location (e.g., a storage yard, a fulfillment center parking lot, etc.). It also includes instructions for the transport vehicle 104 (refer fig.1) to retrieve one or more items at the first location 202 before started travelling to the second location 204, includes instructions for transferring the items to another transport vehicle 104 (e.g., from the van to bicycle, from rail car to semi-trailer truck, etc.), includes the instructions for picking up one or more items at the second pick-up location 204, includes instructions for dropping off one or more items at either the first location 202 or the second location 204, includes instruction to change the delivery route. The transport route may include one or more roads, highways, streets, pathways, railways, sea routes, air routes, or other ways of accessing one location from another.

In accordance with an advantageous embodiment of the present invention, the system 100 (refer fig. 1) provides satisfaction to the customers as they receive their orders on time and increase customer demand. Further, this system also helps in accessing the transient warehouse quickly and automatically delivering the items to an items requester.

In accordance with another advantageous embodiment of the present invention, this invention helps in saving time and manual efforts by delivering the ordered items. Further, this invention also helps in storing and handling items placed in the vehicle 104(refer fig.1) in order to prevent them from getting damaged before delivery.

In accordance with another advantageous embodiment of the present invention, this invention helps in notifying the delivery agent about the delivery location and successful delivery of the order. Further, this invention also helps in the real-time tracking of the vehicle 104 (refer fig.1). Further, the autonomous vehicle transient warehouse system 100 is quick and responsive.

It should be noted that the invention has been described with reference to particular embodiments and that the invention is not limited to the embodiments described herein.

Embodiments are described at least in part herein with reference to flowchart illustrations and/or block diagrams of methods, systems, and computer program products and data structures according to embodiments of the disclosure. It will be understood that each block of the illustrations, and combinations of blocks, can be implemented by computer program instructions. These computer program instructions may be provided to a processor of a general-purpose computer, special purpose computer, or other programmable data processing apparatus to produce a machine such that the instructions, which execute via the processor of the computer or other programmable data processing apparatus, create means for implementing the functions/acts specified in the block or blocks.

## Claims

1. An autonomous vehicle transient warehouse system comprising:
a vehicle (104) for accessing a plurality of items from a first location (202) and then delivering to a second location (204), wherein the vehicle (104) is parked in the second location (204), so that other transport vehicles (104) access the transient warehouse quickly and deliver items;
a plurality of storage racks (108) placed within a container (110) of the vehicle (104) in order to store the items;
a processor (102), wherein the processor (102) is configured to:
receive a plurality of orders from a plurality of customer;
select a delivery path according to a delivery information;
move the vehicle (104) from the first location (202) to the second location (204); and
send real-time notification to a delivery agent through a user terminal (106);
a lifting unit (112) attached with the storage racks (108), wherein the lifting unit (112) is used for moving items from the at least one rack (108) to the at least one other rack (108); and
a solar powered charging unit (114) fixed within the vehicle (104) for providing power to the vehicle (104).

2. The system (100) as claimed in claim 1, wherein a scanning unit (116) is placed inside the vehicle (104) that scans the plurality of items, by scanning a scannable code affixed to the plurality of items.

3. The system (100) as claimed in claim 1, wherein the lifting unit (112) is anyone of a conveyor, a lifter, and a shuttle.

4. The system (100) as claimed in claim 1, wherein the system (100) includes a display unit (118) for displaying delivery details input and delivery route to the delivery agent.

5. The system (100) as claimed in claim 4, wherein the display unit (118) is a LCD (Liquid Crystal Display) screen, a projector, a touch screen, and a flat-panel display.

6. The system (100) as claimed in claim 1, wherein the user terminal (106) is anyone of a mobile app, desktop, and laptop.

7. The system (100) as claimed in claim 1, wherein the real time notification is an Instant Message notification, an SMS, an email, and in-app notification, or any other suitable notification means.

8. The system (100) as claimed in claim 1, wherein the system (100) includes a memory unit (120) used for storing order details, delivery information and scanning details.

9. The system (100) as claimed in claim 1, wherein the first location (202) is anyone of an order packing station, a warehouse, a store house, and a fulfillment center, etc.

10. The system (100) as claimed in claim 1, wherein the second location (204) is anyone of a brick-and-mortar location, a parking lot, order exchanging location, an order delivery station, etc. and the second location (204) is determined to optimize the efficiency of a transport route while including a maximum number of pick-up, drop-off, and/or base locations.

11. The system (100) as claimed in claim 1, wherein the vehicle (104) is anyone of a van, a tractor, a truck, a semi-trailer, a tank car, a rail car, a bicycle, an unmanned vehicle (e.g., an unmanned aerial vehicle (UAV), a land-based unmanned vehicle, etc.), or a remotely-operated machine.
